# EUROPEAN PATENT APPLICATION

(11) **EP 2 040 505 A1**
(43) Date of publication of application: **25.03.2009**
(21) Application number: 08163027.9
(22) Date of filing: 27.08.2008
(51) Int. Cl.: H04W 72/12

(54) **rtPS class of IEEE 802.16/WiBro system**

(30) Priority: 29.08.2007 KR 20070087278
(71) Applicant: Postech Academy-Industry Foundation, San 31, Hyoja-dong Nam-gu Pohang-shi Kyungsangbuk-do 790-784 (KR); Posdata Co., Ltd., Seongnam-city, Gyeonggi-do (KR); Posco Research Association, Pohang-City, Kyungsangbuk-do 790-784 (KR); POSCO, Pohang-city, Nam-gu Gyeongsangbuk-Do (KR)
(72) Inventor: Baek, Joo-Young, 790-784, Kyungsangbuk-do (KR); Kwak, Min-Kon, Gyeonggi-Do (KR); Kwon, Dong-Hee, Gyeonggi-Do (KR); Suh, Young Joo, Gyeongsangbuk-Do (KR)
(74) Representative: Ilgart, Jean-Christophe

(57) **Abstract**

Provided is a real-time polling service (rtPS) class of an IEEE 802.16/WiBro system. An rtPS scheduling method of the IEEE 802.16/WiBro system includes subscriber station (SS) located in a network where the IEEE 802.16/WiBro system is realized inserting a timestamp indicating time information when uplink data is transmitted from an application layer of the SS into the uplink data; and after the SS receives polling from a base station (BS), comparing the timestamp inserted into the uplink data and a current time, and, if a difference between the timestamp and the current time is greater than a predetermined period of time, firstly dropping the uplink data.

## Description

### CROSS-REFERENCE TO RELATED PATENT APPLICATION

This application claims the benefit of Korean Patent Application No. 10-2007-0087278, filed on August 29, 2007, in the Korean Intellectual Property Office, the disclosure of which is incorporated herein in its entirety by reference.

### BACKGROUND OF THE INVENTION

### 1. Field of the Invention

The present invention relates to a traffic class of an IEEE 802.16/WiBro system, and more particularly, to a real-time polling service (rtPS) class.

### 2. Description of the Related Art

An IEEE 802.16 protocol has a physical layer and a medium access control (MAC) layer for a new broadband network.

An IEEE 802.16/WiBro network concerns a base station (BS), a subscriber station (SS), an access router (AR), and the like. The IEEE 802.16 protocol is applied between the BS and SS.

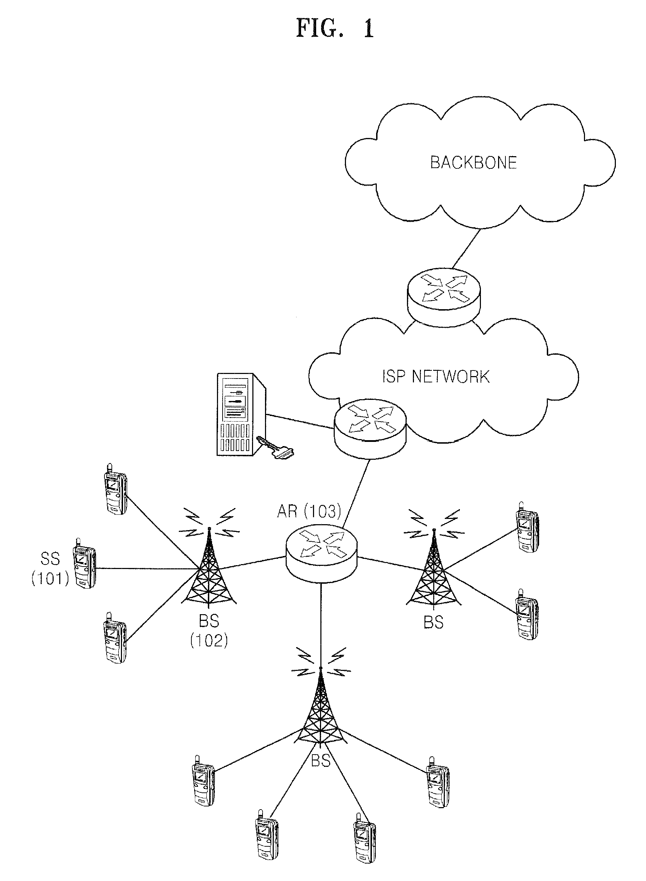

FIG. 1 illustrates the structure of a conventional IEEE 802.16/WiBro network. Referring to FIG. 1, the IEEE 802.16/WiBro network comprises an SS 101 that is a user terminal supporting an IEEE 802.16 protocol, a BS 102 that controls and manages a connection with the SS 101, and an AR 103 that transmits traffic received through the BS 102 to an Internet backbone network.

The IEEE 802.16/WiBro network basically provides a variety of quality of services (QoS). A variety of QoS parameters, such as bandwidth, change according to services provided by an application layer of the SS 101. In the IEEE 802.16/WiBro network, the characteristics of a physical medium, such as a data transmission rate, may rapidly change according to the characteristics and environment of a wireless medium, unlike in a wired network.

In the IEEE 802.16/WiBro network, the SS 101 defines a service class in order to guarantee the QoS. In more detail, the SS 101 defines the service class, such as an unsolicited grant service (UGS) class, an enhanced-real-time polling service (ertPS) class, a real-time polling service (rtPS) class, a non-real-time polling service (nrtPS) class, and a best effort service (BE) class, and defines scheduling according to the service class.

The UGS class provides a real-time data transmission service having a fixed size and a periodic interval, such as a VoIP service.

The ertPS class provides a real-time data transmission service having a fixed size and a periodic interval, such as a VoIP service. But, there is a silence period of this class application. Thus, SS 101 requires the change in the bandwidth and accordingly manages a bandwidth QoS to BS 102.

The rtPS class provides real-time bandwidth request and polling, and variable data scheduling and includes a video call, a video game, video on demand (VOD), etc.

The nrtPS class provides a service sensitive to a minimum data processing rate compensation and packet loss and includes large volume FTP, multimedia email, etc.

The BE class provides a fair scheduling and efficient data retransmission service and includes a web browsing email, a short message transmission service, low speed file transmission, etc.

The present invention relates to the rtPS class.

For example, since the UGS class guarantees a periodic service unlike the rtPS class, scheduling algorithm for the UGS class is less considered than the rtPS class. Since the rtPS class aims at a real-time service, the rtPS class is sensitive to latency and has a lower priority than the UGS class. rtPS scheduling must satisfy the characteristics of real-time traffic, and support a method of notifying the BS 102 of a bandwidth required by the SS 101. In order to satisfy the above requirements, the BS 102 performs periodic polling with regard to a specific SS. The specific SS that receives the polling requests a bandwidth according to an amount required by the specific SS. Hence, although data transmission efficiency between the SS 101 and the BS 102 is optimized, since the bandwidth is expressly requested, the rtPS class has an overhead compared to the UGS class.

Thus, a system of providing a more service by suggesting efficient algorithm suitable for the rtPS class and using efficiently wasted bandwidth is needed.

### SUMMARY OF THE INVENTION

The present invention provides a real-time polling service (rtPS) class of an IEEE 802.16/WiBro system capable of preventing an overhead of the rtPS class.

According to an aspect of the present invention, there is provided a real-time polling service (rtPS) scheduling method of an IEEE 802.16/WiBro system, the method comprising: subscriber station (SS) located in a network where the IEEE 802.16/WiBro system is realized inserting a timestamp indicating time information when uplink data is transmitted from an application layer of the SS into the uplink data; and after the SS receives polling from a base station (BS), comparing the timestamp inserted into the uplink data and a current time, and, if a difference between the timestamp and the current time is greater than a predetermined period of time, firstly dropping the uplink data.

The timestamp may be the time information when the uplink data is transmitted from the application layer of the SS to a physical layer and a medium access control (MAC) layer.

The predetermined period of time may be 200 [mili-seconds].

The method may further comprise: the SS requesting a bandwidth to the BS if the difference between the timestamp and the current time is smaller than the predetermined period of time; and the BS allocating the bandwidth to the SS.

The method may further comprise:, after the SS receives the bandwidth, if the difference between the timestamp and a current time is greater than the predetermined period of time, secondly dropping the uplink data.

The method may further comprise: if the difference between the timestamp and the current time is smaller than the predetermined period of time, the SS transmitting the uplink data to the BS.

According to another aspect of the present invention, there is provided an rtPS scheduling system realized in an IEEE 802.16/WiBro system, the system comprising: an SS located in a network where the IEEE 802.16/WiBro system is realized; and a BS located in the network where the IEEE 802.16/WiBro system is realized, wherein the SS comprises a timestamp inserting unit inserting a timestamp indicating time information when uplink data is transmitted from an application layer of the SS into the uplink data.

If the SS receives polling from the BS, the SS may comprise a data drop unit firstly dropping the uplink data by comparing the timestamp inserted into the uplink data and a current time, and, if a difference between the timestamp and the current time is greater than a predetermined period of time.

The predetermined period of time may be 200 [mili-seconds].

The SS may further comprise a bandwidth request unit requesting a bandwidth to the BS if the difference between the timestamp and the current time is smaller than the predetermined period of time.

After the SS receives the bandwidth, the data drop unit may secondly drop the uplink data, if the difference between the timestamp and a current time is greater than the predetermined period of time.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates the structure of a conventional IEEE 802.16/WiBro network;
FIG. 2 is a diagram of a subscriber station (SS) layer according to an embodiment of the present invention; and
FIG. 3 is a flowchart illustrating a real-time polling service (rtPS) scheduling method according to an embodiment of the present invention.

### DETAILED DESCRIPTION OF THE INVENTION

The attached drawings for illustrating exemplary embodiments of the present invention are referred to in order to gain a sufficient understanding of the present invention, the merits thereof, and the objectives accomplished by the implementation of the present invention.

The present invention will now be described more fully with reference to the accompanying drawings, in which exemplary embodiments of the invention are shown. Like reference numerals in the drawings denote like elements, and thus their description will be omitted.

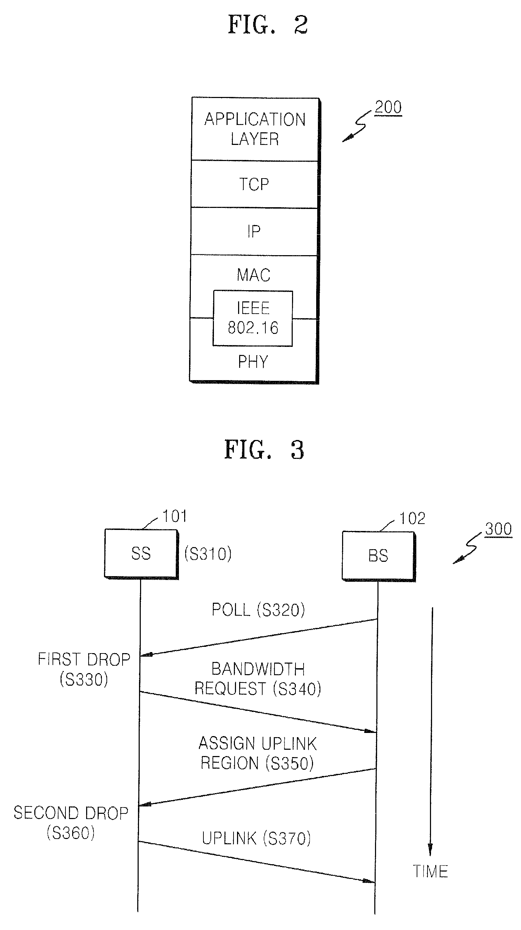

An IEEE 802.16 protocol concerns a physical layer and a medium access control (MAC) layer for a wireless broadband network. The layer structure will now be described with reference to FIG. 2.

FIG. 2 is a diagram of a subscriber station (SS) layer structure 200 according to an embodiment of the present invention. Referring to FIG. 2, the SS layer structure 200 includes a physical layer PHY and a medium access control (MAC) layer relating to an IEEE 802.16 protocol. An IP layer, a TCP layer, and application layer are sequentially disposed above the PHY layer and the MAC layer.

In the layer structure, a user can operate the application layer although the user does not access a lower layer structure. In the present invention, it is important to transmit data from the application layer to the PHY layer and the MAC layer. The reason will now be described in detail with reference to FIG. 3 below.

FIG. 3 is a flowchart illustrating an rtPS scheduling method according to an embodiment of the present invention. Referring to FIG. 3, the SS 101 and the BS 102 are located in a network where the IEEE 802.16/WiBro system is realized.

The rtPS scheduling method will be described with reference to FIGS. 2 and 3.

The SS 101 inserts a timestamp into uplink data (operation 310). The uplink data is referred to data transmitted from the SS 101 to the BS 102. The timestamp is time information when the uplink data is transmitted from the application layer of the SS 101 to the PHY layer and the MAC layer relating to the IEEE 802.16 protocol. The timestamp is used as a reference for measuring latency.

The BS 102 located in the network where the IEEE 802.16/WiBro system is realized performs polling with regard to the SS 101 (operation 320).

Thereafter, the SS 101 compares the timestamp inserted into the uplink data and a current time, and, if a difference between the timestamp and the current time is greater than a predetermined period of time, performs a first drop of dropping the uplink data (operation 330).

The predetermined period of time is generally 200 [mili-seconds]. When the rtPS class that provides a real-time service, such as a video call, a video game, VOD, etc., latency more than 200 [mili-seconds] cause a problem. Therefore, it is advisable not to transmit the uplink data having latency more than the predetermined period of time, resulting in an efficient use of a waste bandwidth.

If the difference between the timestamp and the current time is smaller than the predetermined period of time, the SS 101 performs a bandwidth request to the BS 102 (operation 340).

The BS 102 performs a bandwidth allocation to the SS 101 in response to the bandwidth request (operation 350).

Thereafter, if the difference between the timestamp and the current time is greater than the predetermined period of time, the SS 101 performs a second drop of dropping of the uplink data (operation 360), which is performed in the same manner as the first drop operation 330. The rtPS scheduling method of the present embodiment checks the latency of the uplink data via the first and second drop operations, thereby more efficiently using the allocated bandwidth.

Thereafter, if the difference between the timestamp and the current time is smaller than the predetermined period of time, the SS 101 transmits the uplink data to the BS 102 (operation 370).

An rtPS scheduling system that performs the rtPS scheduling method of the present embodiment comprises the SS 101 and the BS 102 that are located in the network where the IEEE 802.16/WiBro system is realized.

The SS 101 inserts the timestamp indicating time information when the uplink data that is to be transmitted to the BS 102 from the application layer of the SS 101 into the uplink data.

If the BS 102 polls the SS 101, the SS 101 compares the timestamp written to the uplink data and a current time, and if a difference between the timestamp and the current time is greater than a predetermined period of time, firstly drops the uplink data. The predetermined period of time may be 200 [mili-seconds].

If the difference between the timestamp and the current time is smaller than the predetermined period of time, the SS 101 requests a bandwidth to the BS 102 and the BS 102 allocates the bandwidth to the SS 101.

After receiving the bandwidth, the SS 101 secondly drops the uplink data if the difference between the timestamp and the current time is greater than the predetermined period of time. The first drop operation is identical to the second drop operation. The rtPS scheduling system of the present embodiment checks the latency of the uplink data via the first and second drop operations, thereby more efficiently using the allocated bandwidth.

After receiving the bandwidth, the SS 101 transmits the uplink data to the BS 102 if the difference between the timestamp and the current time is smaller than the predetermined period of time.

The rtPS scheduling system realized in the IEEE 802.16/WiBro system comprises the SS 101 and the BS 102. The SS 101 comprises a timestamp inserting unit (not shown) that inserts a timestamp indicating time information when the uplink data transmitted from the application layer of the SS 101 into the uplink data. The timestamp inserting unit can be included in the SS 101 and is easy to one of ordinary skill in the art and thus its detailed description is omitted.

After the BS 102 polls the SS 101, the SS 101 comprises a data dropping unit (not shown) that firstly drops the uplink data if a difference between the timestamp inserted into the uplink data and a current time is greater than a predetermined period of time.

After a bandwidth is allocated to the SS 101, the data dropping unit (not shown) secondly drops the uplink data if the difference between the timestamp and the current time is greater than the predetermined period of time.

If the difference between the timestamp and the current time is smaller than the predetermined period of time, the SS 101 comprises a bandwidth request unit (not shown) that requests a bandwidth to the BS 102.

As described above, the present invention provides a scheduling method and system suitable to an rtPS class of an IEEE 802.16/WiBro system, thereby preventing an overhead of the rtPS class, efficiently using a wasted bandwidth, and providing a service to more users.

While the present invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. A real-time polling service (rtPS) scheduling method of an IEEE 802.16/WiBro system, the method comprising:
subscriber station (SS) located in a network where the IEEE 802.16/WiBro system is realized inserting a timestamp indicating time information when uplink data is transmitted from an application layer of the SS into the uplink data; and
after the SS receives polling from a base station (BS), comparing the timestamp inserted into the uplink data and a current time, and, if a difference between the timestamp and the current time is greater than a predetermined period of time, firstly dropping the uplink data.

2. The method of claim 1, wherein the timestamp is the time information when the uplink data is transmitted from the application layer of the SS to a physical layer and a medium access control (MAC) layer.

3. The method of claim 2, wherein the predetermined period of time is 200 [mili-seconds].

4. The method of claim 1, further comprising:
the SS requesting a bandwidth to the BS if the difference between the timestamp and the current time is smaller than the predetermined period of time; and
the BS allocating the bandwidth to the SS.

5. The method of claim 4, further comprising:, after the SS receives the bandwidth, if the difference between the timestamp and a current time is greater than the predetermined period of time, secondly dropping the uplink data.

6. The method of claim 5, further comprising: if the difference between the timestamp and the current time is smaller than the predetermined period of time, the SS transmitting the uplink data to the BS.

7. An rtPS scheduling system realized in an IEEE 802.16/WiBro system, the system comprising:
an SS located in a network where the IEEE 802.16/WiBro system is realized; and
a BS located in the network where the IEEE 802.16/WiBro system is realized,
wherein the SS comprises a timestamp inserting unit inserting a timestamp indicating time information when uplink data is transmitted from an application layer of the SS into the uplink data.

8. The system of claim 7, wherein, if the SS receives polling from the BS, the SS comprises a data drop unit firstly dropping the uplink data by comparing the timestamp inserted into the uplink data and a current time, and, if a difference between the timestamp and the current time is greater than a predetermined period of time.

9. The system of claim 8, wherein the predetermined period of time is 200 [mili-seconds].

10. The system of claim 8, wherein the SS further comprises a bandwidth request unit requesting a bandwidth to the BS if the difference between the timestamp and the current time is smaller than the predetermined period of time.

11. The system of claim 10, wherein, after the SS receives the bandwidth, the data drop unit secondly drops the uplink data, if the difference between the timestamp and a current time is greater than the predetermined period of time.
